(19) Europäisches Patentamt

European Patent Office

Office européen des brevets

(11) **EP 1 174 697 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(51) Int Cl.7: **G01L 23/22**, F02P 17/12

(21) Anmeldenummer: **01115138.8**

(22) Anmeldetag: **22.06.2001**

(54) **Erkennung klopfender Verbrennung beim Betrieb einer Brennkraftmaschine mit sofortiger Ionenstromnormierung**

Detecting knocking in an internal combustion engine with immediate normalization of an ionic current

Détection de cliquetis dans un moteur à combustion interne avec une normalisation immédiate du courant d'ions

(84) Benannte Vertragsstaaten:
**DE FR GB IT**

(30) Priorität: **05.07.2000 DE 10032702**

(43) Veröffentlichungstag der Anmeldung:
**23.01.2002 Patentblatt 2002/04**

(73) Patentinhaber:
• **DaimlerChrysler AG**
**70567 Stuttgart (DE)**
• **Conti Temic Microelectronic GmbH**
**90411 Nürnberg (DE)**

(72) Erfinder:
• **Hohner, Peter, Dr.**
**70599 Stuttgart (DE)**

• **Knolmayer, Klaus**
**91126 Schwabach (DE)**
• **Miroll, Jörg**
**73257 Köngen (DE)**
• **Niemetz, Linhard**
**91126 Rednitzhembach (DE)**

(74) Vertreter: **Mader, Wilfried**
**DaimlerChrysler AG,**
**Intellectual Property Management**
**IPM, C106**
**70546 Stuttgart (DE)**

(56) Entgegenhaltungen:
**EP-A- 0 922 948       EP-A- 0 950 885**
**WO-A-89/11087       DE-A- 19 810 523**
**DE-A- 19 826 714**

**Beschreibung**

Die Erfindung betrifft ein Verfahren zur Erkennung klopfender Verbrennung beim Betrieb einer Brennkraftmaschine.

Bei fremdgezündeten Brennkraftmaschinen wird das Kraftstoff-Luft - Gemisch bedingt durch die endliche Ausbreitungsgeschwindigkeit der Verbrennung bereits während des Verdichtungstaktes, vor dem oberen Totpunkt, gezündet. Der optimale Zündzeitpunkt wird dabei in Abhängigkeit der Kurbelwellendrehzahl bestimmt. Klopfende Verbrennung entsteht durch zu früh ausgeführte Zündungen, bei denen zu hohe Druckspitzen zu einer Erhöhung der Temperatur des unverbrannten Kraftstoff - LuftGemisches und damit zu lokalen Selbstentzündungen des Kraftstoff-Luft-Gemisches führen. Diese zu hohen Druckspitzen in den Brennräumen entstehen in der Regel während dem Volllastbetrieb der Brennkraftmaschine.

Zur Bestimmung klopfender Verbrennung wird in allen Brennräumen der Brennkraftmaschine der Brennraumdruckverlauf mittels der Ionenstrommessung erfasst. Ein Verfahren zur Ionenstrommessung ist aus der gattungsbildenden EP-A1-922948 bekannt. Klopfende Verbrennung ist dabei am Auftreten von Druckspitzen und Schwingungen im Brennraumdruckverlauf erkennbar. Dazu wird der gleichzeitig als Ionenstromsonde dienenden Zündkerze unmittelbar nach der Zündung des Kraftstoff - Luft - Gemisches über die Zündspule eine Wechselspannung zugeführt. Diese Wechselspannung wird von Ionen im verbrennenden Kraftstoff-Luft - Gemisch in Abhängigkeit des Brennraumdruckes moduliert. Die modulierte Wechselspannung, das Ionenstrom-Rohsignal, wird einer Auswerteschaltung zugeführt.

Wird bei einer Brennkraftmaschine klopfende Verbrennung erkannt, wird der Zündzeitpunkt für den kommenden Arbeitstakt innerhalb des Verdichtungstaktes näher an den oberen Totpunkt hin verschoben. Dabei entfalten Brennkraftmaschinen bei leichtem Klopfen ihre maximale Leistung, während bei starkem Klopfen die Gefahr besteht, dass an der Brennkraftmaschine mit der Zeit Schäden auftreten. Somit besteht die Notwendigkeit für den Wert des Klopfintegrals einen Schwellwert zu bestimmen, bis zu dem die Brennkraftmaschine mit leichtem Klopfen betrieben werden kann, und ab dem der Zündzeitpunkt in Richtung des oberen Totpunktes hin verschoben werden muss.

Das Problem bei der Auswertung eines Ionenstromsignals besteht in hohen Intensitätsschwankungen, die bei der Messung des Ionenstromsignals von Arbeitstakt zu Arbeitstakt auftreten.

Derartige Intensitätsschwankungen können bewirken, dass mit geringer Intensität gemessene Ionenstrom-Rohsignale, die große durch Klopfen verursachte Druckspitzen und Schwingungen aufweisen, so geringe Werte für das Klopfintegral ergeben, dass sie unterhalb des Schwellwertes für das Klopfintegral bleiben und somit der Zündzeitpunkt nicht zum oberen Totpunkt hin verschoben wird.

Ebenfalls können mit hoher Intensität gemessene Ionenstrom-Rohsignale, die geringe durch Klopfen verursachte Druckspitzen und Schwingungen aufweisen, so hohe Werte für das Klopfintegral ergeben, dass sie oberhalb des Schwellwertes für das Klopfintegral liegen und somit der Zündzeitpunkt zum oberen Totpunkt hin verschoben wird, wodurch die Brennkraftmaschine ihre Maximalleistung nicht entfaltet.

Um durch Schwankungen in der Zusammensetzung des Kraftstoffs bedingte Intensitätsschwankungen des Ionenstrom-Rohsignals auszugleichen, wird in der gattungsbildenden EP-A1-922948 vorgeschlagen, einen Korrekturwert aus wenigstens einem der vorangehenden Integralwerte des Ionenstromsignals (Klopfintegral) abzuleiten. Besonders sei es vorteilhaft gemäß diesem bekannten Verfahren, den Korrekturwert aus einer zeitlichen Gewichtung mehrerer vorangegangener Integralwerte zu bestimmen.

Zur Korrekturwertbestimmung wird der Integralwert (abzüglich eines Integralmittelwertes) in einem Schieberegister gespeichert. Zuvor wurde der Speicherinhalt um eine Position nach hinten verschoben. Der aktuelle Wert wird in die erste Position eingetragen und für die aktuelle Korrekturwertbestimmung noch nicht berücksichtigt. Mit einer Gewichtsfunktion G werden die in den Stellen des Schieberegisters gespeicherten vorangegangenen Integralwerte elementweise multipliziert, wobei die Summe der vergebenen Gewichte vorzugsweise auf einen Einheitswert normiert wird und entsprechend mit dem zeitlichen Abstand zum aktuellen Integralwert, also mit zunehmender Stelle im Schieberegister, immer kleiner wird. Der Korrekturwert wird dann als Quotient aus einem Normwert für den Integralwert und der gewichteten vorangegangenen Integralwerte ermittelt.

Nachfolgend wird der Integralwert mit dem Korrekturwert multipliziert und der so korrigierte Integralwert einem Klopfschwellenvergleich zugeführt, um in Abhängigkeit vom Vergleich mit einer oder mehreren Klopfschwellen ein Klopferkennungssignal zu erzeugen. Der so erzeugte Korrekturwert kann auch direkt mit dem Ionenstrom-Rohsignal multipliziert werden.

Ferner ist in der EP-A1-922948 offenbart, dass zur Auswertung zuerst das Ionenstrom-Rohsignal durch einen Bandpass gefiltert wird. Anschließend wird der nicht durch Klopfen verursachte Teil des gefilterten Signals durch Fensterung ausgeblendet. Die verbleibenden Signalanteile werden gleichgerichtet und anschließend integriert und wie oben ausgeführt, mit einem Korrekturwert multipliziert. Der resultierende Wert des Klopfintegrals ist proportional zur Intensität der Druckspitzen des Brennraumdruckverlaufes.

Weiterhin beschreibt die DE-A1-19810523 ein System zur Erfassung eines Ionenstromes, bei dem der absolute Spitzenwert des Ionenstroms erfasst wird und die Basis zum Korrigieren des Ionenstromes bildet. Zum einen kann der so erfasste Spitzenwert in einem Regelkreis zur Steuerung des Verstärkungsfaktors eines das Ionenstromsignals verstärkenden Verstärkers eingesetzt werden und zum anderen zur Korrektur des Klopfsignals verwendet werden, indem eine Verarbeitungseinheit einen Korrekturkoeffizienten in Abhängigkeit der Drehzahl der Brennkraftmaschine und dem Spitzenwert des Ionenstromsignals durch Interpolation von in einem Kennfeld abgelegten typischen Korrekturwerten ermittelt.

Abschließend sei auf die DE 42 32 845 C2 verwiesen, in der zur Verbesserung der Beurteilung des Wertes des Klopfintegrals vorgeschlagen wird, einen Mittelwert zu bilden, wobei Werte des Klopfintegrals summiert und durch ihre Anzahl dividiert werden. Der Nachteil dieser Vorgehensweise besteht darin, dass die Klopfintegralwerte zwar besser beurteilt werden können, die Intensitätsschwankungen des Ionenstrom-Rohsignals aber im Mittelwert der Klopfintegralwerte noch enthalten sind.

Der Erfindung liegt die Aufgabe zugrunde, ein Verfahren zur Erkennung klopfender Verbrennung beim Betrieb einer Brennkraftmaschine anzugeben, das eine zuverlässige Beurteilung des Wertes des Klopfintegrals gewährleistet und Schwankungen in der Intensität des Ionenstrom-Rohsignals kompensiert.

Diese Aufgabe wird erfindungsgemäß durch den Patentanspruch 1 gelöst.

Zudem kann zur Durchführung der Normierung unter Berücksichtigung von Mittelwerten der Quotient aus gemittelten Ionenstromamplitudenwerten der vergangenen Verbrennungstakte und einem aktuellen Ionenstromamplitudenwert gebildet werden, oder es wird der Quotient aus gemittelten Ionenstromintegralwerten der vergangenen Verbrennungstakte und einem aktuellen Ionenstromintegralwert gebildet.

Als Normierung zur Beurteilung des Wertes der Klopfintegrals wird das Ionenstrom-Rohsignal oder der Wert der Klopfintensität durch den Ionenstromamplitudenwert dividiert.

Alternativ kann als Normierung zur Beurteilung des Wertes der Klopfintegrals das Ionenstrom - Rohsignal oder der Wert der Klopfintensität durch den Ionenstromintegralwert dividiert werden.

Zwei weitere Normierungen zur Beurteilung des Wertes der Klopfintegrals bestehen in Bildung des Quotienten aus dem gemittelten Ionenstromamplitudenwert und dem Ionenstromamplitudenwert, multipliziert mit dem Ionenstrom - Rohsignal oder multipliziert mit dem Wert der Klopfintensität.

Zwei weitere alternative Normierungen zur Beurteilung des Wertes der Klopfintegrals bestehen in der Bildung des Quotienten aus dem gemittelten Ionenstromintegralwert und dem Ionenstromintegralwert, multipliziert mit dem Ionenstrom - Rohsignal oder multipliziert mit dem Wert der Klopfintensität.

Die Auswertung des Ionenstrom - Rohsignals erfolgt zumindest in den Verfahrensschritten:

Filtern, wodurch von dem Ionenstrom - Rohsignal lediglich die Schwingungen des Klopfens oder der Zündung als Signal verbleiben.
Fenstern, wodurch lediglich die Schwingungen des Klopfens als Signal verbleiben. Gleichrichten, wodurch negative Signalwerte vermieden werden.
Integrieren, wodurch der Wert der Klopfintensität gebildet wird.

In einer Weiterbildung der Erfindung ist vorgesehen, daß als Ionenstromsonden die Zündkerzen der Brennkraftmaschine verwendet werden.

In einer weiteren Weiterbildung der Erfindung ist vorgesehen, daß die Mittelwertbildung des Ionenstromamplitudenwertes oder des Ionenstromintegralwertes als gleisende Mittelwertbildung durchgeführt wird.

Zur gleitenden Mittelwertbildung wird der Mittelwert der Ionenstromamplitude oder des Ionenstromintegrals der vorangegangenen Verbrennungstakte vom aktuellen Ionenstromamplitudenwert oder dem aktuellen Ionenstromintegralwert subtrahiert, dieses Differenz wird mit einem Wichtungsfaktor multipliziert, und anschließend wird dieses Produkt zum Mittelwert der Ionenstromamplitude oder des Ionenstromintegrals der vorangegangenen Verbrennungstakte addiert.

Durch das erfindungsgemäße Verfahren zur Erkennung klopfender Verbrennung beim Betrieb einer Brennkraftmaschine wird eine zuverlässige Beurteilbarkeit des Wertes des Klopfintegrals gegeben, wodurch der Betrieb einer Brennkraftmaschine mit ihrer Maximalleistung ermöglicht wird.

Im folgenden ist das Verfahren zur Erkennung klopfender Verbrennung beim Betrieb einer Brennkraftmaschine, bei dem Schwankungen in der Intensität des Ionenstrom - Rohsignals durch Normieren des Ionenstrom - Rohsignals oder des Wertes der Klopfintensität kompensiert werden anhand von Ausführungsbeispielen im Zusammenhang mit zwei Figuren dargestellt und erläutert.

Es zeigen:

Figur 1    eine Abfolge von Diagrammen zur Auswertung des Ionenstrom-Rohsignals, wobei die Normierung am Ionenstrom - Rohsignal durchgeführt wird,

Figur 2    Blockschaltbild für eine Normierung des Klopfintegralwertes.

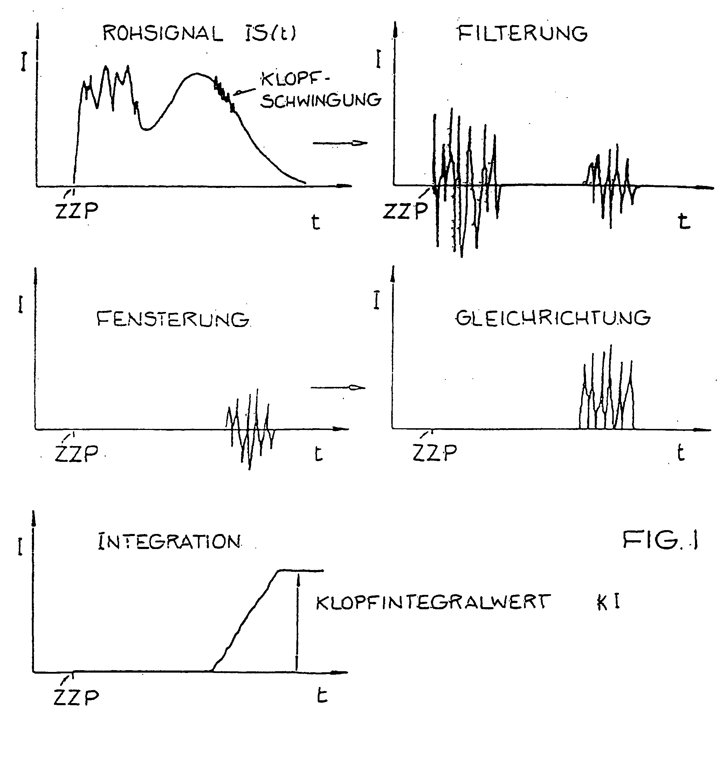

In Figur 1 ist eine Abfolge von Diagrammen dargestellt, welche den Ablauf der Auswertung des Ionenstrom - Rohsignals IS(t) wiedergeben. Ziel der Auswertung ist es, ein zur Intensität des Klopfens proportionalen Wert, den Klopfintegralwert KI, anzugeben.
In dem ersten Diagramm ist das Ionenstrom - Rohsignal IS(t) ab dem Zündzeitpunkt ZZP dargestellt, wie es von den als Ionenstromsonden dienenden Zündkerzen in

den Verbrennungsräumen einer Brennkraftmaschine aufgenommen wird.

Das Ionenstrom - Rohsignal IS (t) besteht aus mehreren Signalanteilen. Vom Zündzeitpunkt ausgehend werden in einem ersten Maximum Signalanteile gemessen, die im allgemeinen als Zündstörungen bezeichnet werden, die für die Auswertung keine Bedeutung besitzen und auf den Verbrennungsvorgang zurückzuführen sind. Im Anschluß daran wird ein zweites Maximum gemessen, das zum Druck und der Temperatur der Verbrennung proportional ist. Klopfende Verbrennung äußert sich in der Form von Intensitätsspitzen an der abfallenden Flanke nach dem zweiten Maximum des Ionenstromsignals.

Das zweite Diagramm zeigt das Ionenstrom - Rohsignal IS(t), nachdem es mittels Bandfiltern, beispielsweise einem Hochpaß, gefiltert wurde. Dabei werden dem Signalverlauf Gleichspannungsanteile entzogen, wonach der gefilterte Signalverlauf nur noch die Schwingungen des Verbrennungsvorgangs und des Klopfsignals zeigt.

Das dritte Diagramm zeigt den gefilterten Signalverlauf nach der Fensterung, durch welche die Schwingungen des Verbrennungsvorgangs ausgeblendet werden, und durch die der Signalverlauf nur noch die Schwingungen des Klopfsignals aufweist.

Das vierte Diagramm zeigt die Schwingung des Klopfsignals, nachdem der Signalverlauf gleichgerichtet wurde.

Das fünfte Diagramm zeigt den gleichgerichteten Verlauf der Schwingung des Klopf signals, nachdem es integriert wurde. Der Wert der Integration, der Klopfintegralwert KI, ist ein Maß für die Intensität des Klopfens.

Bei der Untersuchung von Verbrennungsabläufen hat sich gezeigt, daß eine Brennkraftmaschine im Vollastbetrieb, bei dem Klopfen mit geringer Intensität auftritt, ihre maximale Leitung entfaltet.

Während dieses Klopfen mit geringer Intensität die Brennkraftmaschine auch auf Dauer nicht schädigt, kann es durch Klopfen mit hoher Intensität zu mechanischen Schäden kommen. Dadurch ist es notwendig für die Beurteilung des Klopfintegralwertes einen Schwellwert festzulegen, bis zu dem Klopfen beim Vollastbetrieb der Brennkraftmaschine zugelassen wird, ohne dass der Zündzeitpunkt zum oberen Totpunkt hin verschoben wird.

Aufgrund der chaotischen Natur der Verbrennung des Kraftstoff - Luft - Gemisches variiert die Intensität des Verlaufes des Ionenstrom - Rohsignals IS(t) und damit auch der Klopfintegralwert KI von einem Verbrennungsvorgang eines Zylinders zum nächsten. Zur Vermeidung von Beurteilungsfehlern des Klopfintegralwertes KI im Vergleich zum Schwellwert kann entweder das Ionenstrom - Rohsignal IS(t) oder der Klopfintegralwert KI normiert werden.

Zur Durchführung der Normierung werden aus dem zweiten Maximum des Ionenstrom - Rohsignal IS

(t) wahlweise entweder der Ionenstromintegralwert II oder die Ionenstromamplitude IM bestimmt.

Das normierte Ionenstrom - Rohsignal ISn(t) kann wahlweise durch die folgenden Operationen gebildet werden:

$$1.1. \ ISn(t) = \frac{IS(t)}{II}$$

$$1.2. \ ISn(t) = \frac{IS(t)}{IM}$$

Der normierte Klopfintegralwert KIn kann wahlweise durch die folgenden Operationen gebildet werden:

$$2.1. \ KIn = \frac{KI}{II}$$

$$2.2. \ KIn = \frac{KI}{IM} \qquad\qquad 2.2.$$

Durch die Operationen 1.1. bis 2.2. wird jeweils das aktuelle Ionenstrom - Rohsignal IS(t) oder der aktuelle Klopfintegralwert KI normiert. Sollen zur Normierung des Ionenstrom - Rohsignals IS(t) oder des Klopfintegralwertes KI auch vorangegangener Ionenstrom - Rohsignale IS(t) oder vorangegangener Klopfintegralwerte KI berücksichtigt werden, kann eine Mittelwertbildung der Ionenstromamplitude IM oder des Ionenstromintegrals II durchgeführt werden. Diese Mittelwertbildung kann vorteilhaft als gleitende Mittelwertbildung durchgeführt werden.

Bei der gleitenden Mittelwertbildung wird der Mittelwert der Ionenstromamplitude $\overline{IM}$ des vorangegangenen Verbrennungstaktes oder der Mittelwert des Ionenstromintegrals $\overline{II}$ des vorangegangenen Verbrennungstaktes vom aktuellen Ionenstromamplitudenwert IM oder vom aktuellen Ionenstromintegralwert II subtrahiert, dieses Differenz wird mal zwei hoch minus einem Wichtungsfaktor k multipliziert, und anschließend dieses Produkt zum Mittelwert der Ionenstromamplitude $\overline{IM}$ oder des Ionenstromintegrals $\overline{II}$ der vorangegangenen Verbrennungstakte addiert. Der Wichtungsfaktor k ist ein Maß dafür, wie schnell der zu bildende Mittelwert aktuell bestimmten Werten folgt, bzw. wie viele vorangegangene Verbrennungszyklen berücksichtigt werden sollen.

Das normierte Ionenstrom - Rohsignal ISn(t), bei dem vorangegangene Ionenstrom - Rohsignale IS(t) berücksichtigt sind, kann wahlweise durch die folgenden Operationen gebildet werden:

$$3.1. \ ISn(t) = \frac{IS(t)}{II} * \overline{II}$$

$$3.2. \ ISn(t) = \frac{IS(t)}{IM} * \overline{IM}$$

Der normierte Klopfintegralwert Kin, bei dem vorangegangene Klopfintegralwerte KI berücsichtigt werden, kann wahlweise durch die folgenden Operationen gebildet werden:

$$4.1.\ Kln = \frac{KI}{II} * \bar{II}$$

$$4.2.\ Kln = \frac{KI}{IM} * \overline{IM}$$

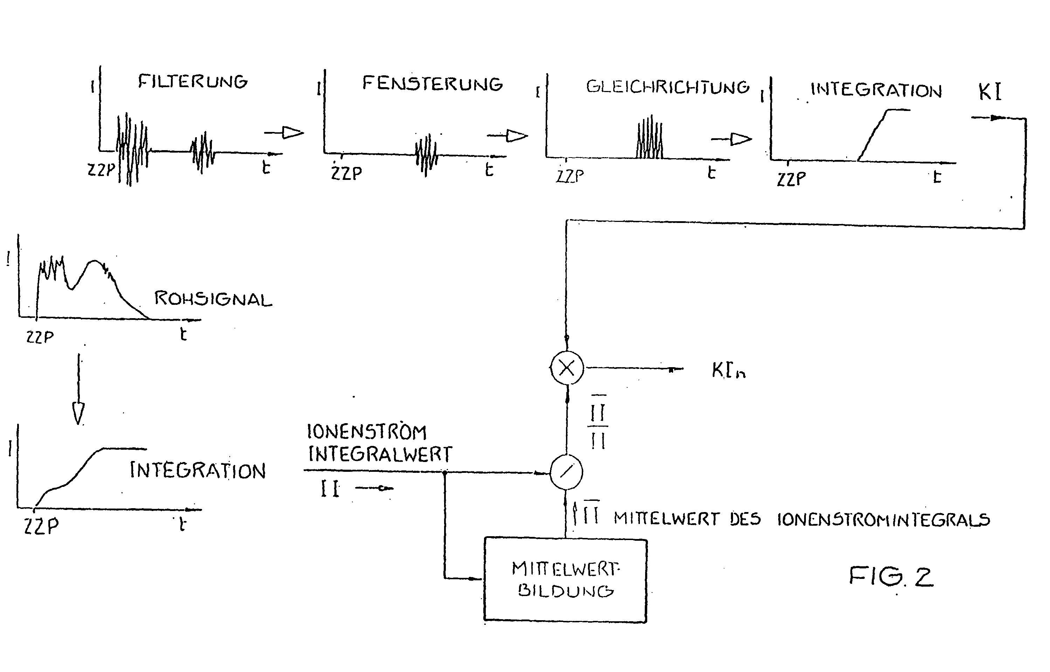

In Figur 2 ist das Blockschaltbild zur Bildung des normierten Klopfintegralwertes KIn aus dem Klopfintegralwert KI mit Berücsichtigung der Abweichung des Ionenstromintegrals II vom Mittelwert des Ionenstromintegrals $\bar{II}$ dargestellt.

Durch das normierte Ionenstrom - Rohsignal ISn(t) oder den normierten Klopfintegralwert KIn kann die Brennkraftmaschine aufgrund der zuverlässigen Beurteilbarkeit des Klopfintegralwertes KI im Vergleich mit dem Schwellwert im Vollastbetrieb ihre Maximalleistung entfalten, ohne daß an der Brennkraftmaschine Schäden durch zu starkes Klopfen zu befürchtet sind.

**Patentansprüche**

1. Verfahren zur Erkennung klopfender Verbrennung beim Betrieb einer Brennkraftmaschine, wobei während dem Verbrennungstakt in den Verbrennungsräumen der Brennkraftmaschine mittels einer Ionenstromsonde ein Ionenstrom-Rohsignal (IS(t)) gemessen wird, daraus ein Wert der Klopfintensität (KI) abgeleitet und ausgewertet wird und Schwankungen in der Intensität des Ionenstrom-Rohsignals (IS(t)) kompensiert werden, indem das Ionenstrom-Rohsignal (IS(t)) oder der Wert der Klopfintensität (KI) normiert werden, wobei
sich der zeitliche Verlauf des Ionenstrom-Rohsignals (IS(t)) zuerst aus Zündstörungen mit einem ersten Maximum der Verbrennung und dann aus einem zweiten Maximum des Ionenstromes zusammensetzt, und dass zur Durchführung der Normierung nach jedem Verbrennungstakt der Maximalwert des zweiten Maximums des Ionenstrom-Rohsignals (IS(t)) oder der Ionenstromintegralwert (II) als das integrierte Ionenstrom-Rohsignal (IS(t)) aktuell bestimmt wird.

2. Verfahren nach Anspruch 1,
**dadurch gekennzeichnet,**
**dass** zur Durchführung der Normierung der Quotient aus gemittelten Ionenstromamplitudenwerten ($\overline{IM}$) der vergangenen Verbrennungstakte und einem aktuellen Ionenstromamplitudenwert (IM) gebildet wird, oder der Quotient aus gemittelten Ionenstromintegralwerten ($\bar{II}$) der vergangenen Verbrennungstakte und einem aktuellen Ionenstromintegralwert (II) gebildet wird.

3. Verfahren nach Anspruch 1,
**dadurch gekennzeichnet,**
**dass** als Normierung das Ionenstrom-Rohsignal (IS(t)) oder der Wert der Klopfintensität (KI) durch den Ionenstromamplitudenwert (IM) dividiert wird.

4. Verfahren nach Anspruch 1,
**dadurch gekennzeichnet,**
**dass** als Normierung das Ionenstrom-Rohsignal (IS(t)) oder der Wert der Klopfintensität (KI) durch den Ionenstromintegralwert (II) dividiert wird.

5. Verfahren nach Anspruch 2,
**dadurch gekennzeichnet,**
**dass** als Normierung der Quotient aus dem gemittelten Ionenstromamplitudenwert ($\overline{IM}$) und dem Ionenstromamplitudenwert (IM) mit dem Ionenstrom-Rohsignal (IS(t)) oder dem Wert der Klopfintensität (KI) multipliziert wird.

6. Verfahren nach Anspruch 2,
**dadurch gekennzeichnet,**
**dass** als Normierung der Quotient aus dem gemittelten Ionenstromintegralwert ($\bar{II}$) und dem Ionenstromintegralwert (II) mit dem Ionenstrom-Rohsignal (IS(t)) oder dem Wert der Klopfintensität (KI) multipliziert wird.

7. Verfahren nach Anspruch 1,
**dadurch gekennzeichnet,**
**dass** das Ionenstrom-Rohsignal (IS(t)) zur Auswertung gefiltert, gefenstert, gleichgerichtet und zur Bildung des Klopfintegralwertes (KI), Wert der Klopfintensität, integriert wird.

8. Verfahren nach Anspruch 1,
**dadurch gekennzeichnet,**
**dass** als Ionenstromsonden die Zündkerzen der Brennkraftmaschine verwendet werden.

9. Verfahren nach Anspruch 2,
**dadurch gekennzeichnet,**
**dass** die Mittelwertbildung des Ionenstromamplitudenwertes (IM) oder des Ionenstromintegralwertes (II) als gleitende Mittelwertbildung durchgeführt wird.

10. Verfahren nach Anspruch 9,
**dadurch gekennzeichnet,**
**dass** zur gleitenden Mittelwertbildung der Mittelwert, der Ionenstromamplitudenwert ($\overline{IM}$) oder der Mittelwert des Ionenstromintegrals ($\bar{II}$) der vorangegangenen Verbrennungstakte vom aktuellen Ionenstromamplitudenwert (IM)
oder dem aktuellen Ionenstromintegralwert (II) subtrahiert wird, diese Differenz mit einem Wichtungsfaktor (k) multipliziert wird, und anschließend dieses Produkt zum Mittelwert der Ionenstromamplitude ($\overline{IM}$) oder zum Mittelwert des Ionenstromintegrals ($\overline{II}$) der vorangegangenen Verbrennungstakte addiert wird.

## Claims

1. Method of detecting knocking combustion during operation of an internal combustion engine, whereby an ion current raw signal (IS(t)) is measured in the combustion chambers of the internal combustion engine by means of an ion current sensor during the combustion cycle, a value for the knock intensity (KI) is derived therefrom and evaluated, and fluctuations in the intensity of the ion current raw signal (IS(t)) are compensated by normalising the ion current raw signal (IS (t)) or the value of the knock intensity (KI), whereby the timing curve of the ion current raw signal (IS(t)) is initially made up of parasitic firing with a first combustion maximum and then a second maximum of the ion current, and the maximum value of the second maximum of the ion current raw signal (IS(t)) or the ion current integral value (II) is instantaneously determined as the integrated ion current raw signal (IS(t)) in order to run the normalisation after every combustion cycle.

2. Method as claimed in claim 1,
   **characterised in that**
   in order to run the normalisation, the quotient is derived from the averaged ion current amplitude values (IM) of the preceding combustion cycles and an instantaneous ion current amplitude value (IM), or the quotient is derived from the averaged ion current integral values (II) of the preceding combustion cycles and an instantaneous ion current integral value (II).

3. Method as claimed in claim 1,
   **characterised in that**
   normalisation is obtained by dividing the ion current raw signal (IS(t)) or the value of the knock intensity (KI) by the ion current amplitude value (IM).

4. Method as claimed in claim 1,
   **characterised in that**
   normalisation is obtained by dividing the ion current raw signal (IS(t)) or the value of the knock intensity (KI) by the ion current integral value (II).

5. Method as claimed in claim 2,
   **characterised in that**
   normalisation is obtained by multiplying the quotient of the averaged ion current amplitude value ($\overline{IM}$) and the ion current amplitude value (IM) by the ion current raw signal (IS(t)) or the value of the knock intensity (KI).

6. Method as claimed in claim 2,
   **characterised in that**
   normalisation is obtained by multiplying the quotient of the averaged ion current integral value ($\overline{II}$) and the ion current integral value (II) by the ion current raw signal (IS(t)) or the value of the knock intensity (KI).

7. Method as claimed in claim 1,
   **characterised in that**
   for evaluation purposes, the ion current raw signal (IS(t)) is filtered, windowed, rectified and integrated in order to obtain the knock integral value (KI), representing knock intensity.

8. Method as claimed in claim 1,
   **characterised in that**
   the spark plugs of the internal combustion engine are used as ion current sensors.

9. Method as claimed in claim 2,
   **characterised in that**
   the method of averaging the ion current amplitude value (IM) or the ion current integral value (II) is a sliding average method.

10. Method as claimed in claim 9,
    **characterised in that**
    in order to obtain the sliding average, the mean value of the ion current amplitude value ($\overline{IM}$) or the mean value of the ion current integral (II) of the preceding combustion cycles is subtracted from the instantaneous ion current amplitude value (IM) or from the instantaneous ion current integral value (II), this difference is multiplied by a weighting factor (k) and this product is then added to the mean value of the ion current amplitude ($\overline{IM}$) or to the mean value of the ion current integral (II) of the preceding combustion cycles.

## Revendications

1. Procédé pour la détection de cliquetis pendant le fonctionnement d'un moteur à combustion interne, dans lequel, pendant le cycle de combustion, un signal brut de courant d'ions (IS(t)) est mesuré dans les chambres de combustion du moteur à combustion interne au moyen d'une sonde de courant d'ions, une valeur de l'intensité de cliquetis (KI) est déduite et exploitée et les variations de l'intensité du signal brut de courant d'ions (IS(t)) sont compensées en normalisant le signal brut de courant d'ions (IS(t)) ou la valeur de l'intensité de cliquetis (KI), et dans lequel la variation temporelle du signal brut de courant d'ions (IS(t)) est d'abord constituée de défauts d'allumage avec un premier maximum de combustion et ensuite d'un second maximum du courant d'ions et, moyennant quoi, pour la réalisation de la normalisation, après chaque cycle de combustion, la valeur maximale du second maximum du signal brut de courant d'ions (IS(t)) ou la valeur intégrale du courant d'ions (II) est effectivement déterminée comme le signal brut de courant d'ions intégré (IS(t)).

2. Procédé selon la revendication 1, **caractérisé en ce que**, pour la réalisation de la normalisation, on établit le quotient à partir de valeurs d'amplitude de courant d'ions moyennées $(\overline{IM})$ des cycles de combustion précédents et d'une valeur d'amplitude de courant d'ions réelle (IM), ou on établit le quotient à partir de valeurs intégrales de courant d'ions moyennées $(\overline{II})$ des cycles de combustion précédents et d'une valeur intégrale de courant d'ions réelle (II).

3. Procédé selon la revendication 1, **caractérisé en ce que**, comme normalisation, le signal brut de courant d'ions (IS(t)) ou la valeur de l'intensité de cliquetis (KI) est divisé par la valeur d'amplitude de courant d'ions (IM).

4. Procédé selon la revendication 1, **caractérisé en ce que**, comme normalisation, le signal brut de courant d'ions (IS(t)) ou la valeur de l'intensité de cliquetis (KI) est divisé par la valeur intégrale de courant d'ions (II).

5. Procédé selon la revendication 2, **caractérisé en ce que**, comme normalisation, le quotient à partir de la valeur d'amplitude de courant d'ions moyennée $(\overline{IM})$ et de la valeur d'amplitude de courant d'ions (IM) est multiplié par le signal brut de courant d'ions (IS(t)) ou la valeur de l'intensité de cliquetis (KI).

6. Procédé selon la revendication 2, **caractérisé en ce que**, comme normalisation, le quotient à partir de la valeur intégrale de courant d'ions moyennée $(\overline{II})$ et de la valeur intégrale de courant d'ions (II) est multiplié par le signal brut de courant d'ions (IS(t)) ou la valeur de l'intensité de cliquetis (KI).

7. Procédé selon la revendication 1, **caractérisé en ce que** le signal brut de courant d'ions (IS (t)) est filtré, fenêtré, démodulé pour l'exploitation et intégré pour l'élaboration de la valeur intégrale de cliquetis (KI), la valeur de l'intensité de cliquetis.

8. Procédé selon la revendication 1, **caractérisé en ce que** l'on utilise les bougies d'allumage du moteur à combustion interne comme sondes de courant d'ions.

9. Procédé selon la revendication 2, **caractérisé en ce que** la formation de la valeur moyenne de la valeur d'amplitude de courant d'ions (IM) où de la valeur intégrale de courant d'ions (II) est réalisée comme formation de valeur moyenne à échelle mobile.

10. Procédé selon la revendication 9, **caractérisé en ce que**, pour la formation de la valeur moyenne à échelle mobile, la valeur moyenne, la valeur d'amplitude de courant d'ions $(\overline{IM})$ ou la valeur moyenne de l'intégrale de courant d'ions $(\overline{II})$ des cycles de combustion précédents est soustraite de la valeur d'amplitude de courant d'ions réelle (IM), cette différence est multipliée par un facteur de pondération (k) et, ensuite, ce produit est additionné à la valeur moyenne d'amplitude de courant d'ions $(\overline{IM})$ ou à la valeur moyenne de l'intégrale de courant d'ions $(\overline{II})$ des cycles de combustion précédents.

ROHSIGNAL IS(t)

I

KLOPF-
SCHWINGUNG

ZZP

t

FILTERUNG

I

ZZP

t

FENSTERUNG

I

ZZP

t

GLEICHRICHTUNG

I

ZZP

t

INTEGRATION

I

KLOPFINTEGRALWERT   KI

ZZP

t

FIG. 1

FILTERUNG

FENSTERUNG

GLEICHRICHTUNG

INTEGRATION     KI

ZZP          t
ZZP          t
ZZP          t
ZZP          t

ROHSIGNAL

ZZP          t

INTEGRATION

ZZP          t

IONENSTROM
INTEGRALWERT

II

$\overline{II}$   MITTELWERT DES IONENSTROMINTEGRALS

$\frac{II}{\overline{II}}$

$KI_n$

MITTELWERT-
BILDUNG

FIG. 2

EP 1 174 697 B1